# EUROPÄISCHE PATENTANMELDUNG

(11) **EP 3 067 230 A1**
(43) Veröffentlichungstag der Anmeldung: **14.09.2016**
(21) Anmeldenummer: 15158199.8
(22) Anmeldetag: 09.03.2015
(51) Int. Cl.: B60K 15/04

(54) **Einfüllkopf**

(71) Anmelder: Magna Steyr Fuel Systems GesmbH, 8261 Sinabelkirchen (AT)
(72) Erfinder: Hendler, René, 8020 Graz (AT); Pallaver, Harald, 8143 St. Josef (AT)
(74) Vertreter: Zangger, Bernd

(57) **Zusammenfassung**

Ein Einfüllkopf für einen Kraftstofftank, wobei der Einfüllkopf (1) einen Gehäusemantel (2) umfasst und einen Gehäuseboden (3), wobei im Gehäuseboden (3) eine Einfüllrohr-Öffnung (4) zur Verbindung mit einem Einfüllrohr (5) ausgebildet ist, wobei im Gehäusemantel (2) eine Anschluss-Öffnung (6) ausgebildet ist, wobei der Gehäuseboden (3) ein vom Gehäusemantel (2) verschiedenes Bauteil ist.

## Beschreibung

### Gebiet der Erfindung

Die vorliegende Erfindung betrifft einen Einfüllkopf für einen Kraftstofftank.

### Stand der Technik

Derartige Einfüllköpfe werden, insbesondere im Automobilbau, an einem Ende eines Einfüllrohres zur Betankung eines Kraftstofftanks eingesetzt, wobei der Kraftstofftank am entgegengesetzten Ende des Einfüllrohres angeordnet ist. Der Einfüllkopf dient in erster Linie zum Einführen einer Zapfpistole beim Betanken des Kraftstofftanks. Auch ist bekannt Entlüftungsleitungen aus einem Einfüllkopf zu führen, insbesondere zur Entlüftung während der Betankung des Kraftstofftanks.

Einen Kraftstoffbehälter mit einem Einfüllrohr und mit einer Entlüftungsleitung, die an einen Einfüllkopf des Einfüllrohres angeschlossen ist, offenbart beispielsweise die DE 10 2008 061 264 A1.

Einfüllköpfe weisen immer eine Einfüllrohr-Öffnung zur Verbindung mit einem Einfüllrohr auf und können eine Anschluss-Öffnung aufweisen, um insbesondere eine Entlüftungsleitung mit dem Einfüllkopf verbinden zu können.

Da Einfüllköpfe meist nicht völlig radialsymmetrisch aufgebaut sind, ist eine Änderung der Position der Anschluss-Öffnung, beispielsweise bei der Herstellung der Einfüllköpfe für verschiedene Fahrzeugtypen, nicht immer unproblematisch und kann beispielsweise eine unerwünschte Positionsänderung des Einfüllrohres oder eine Änderung der Herstellungs-Werkzeuge erforderlich machen.

### Zusammenfassung der Erfindung

Es ist eine Aufgabe der Erfindung, einen Einfüllkopf anzugeben, der einfach für verschiedene Fahrzeugtypen modifiziert werden kann und insbesondere verschiedene Positionen einer Anschluss-Öffnung ermöglicht und dabei die oben genannten Nachteile vermeidet.

Die Lösung der Aufgabe erfolgt durch einen Einfüllkopf für einen Kraftstofftank, wobei der Einfüllkopf einen Gehäusemantel umfasst und einen Gehäuseboden, wobei im Gehäuseboden eine Einfüllrohr-Öffnung zur Verbindung mit einem Einfüllrohr ausgebildet ist, wobei im Gehäusemantel eine Anschluss-Öffnung ausgebildet ist, wobei der Gehäuseboden ein vom Gehäusemantel verschiedenes Bauteil ist.

Das Gehäuse eines erfindungsgemäßen Einfüllkopfes besteht also aus mindestens zwei Teilen, einer Mantelfläche, insbesondere in Form des Mantels eines Zylinders oder eines Kegelstumpfs, und einem Bodenteil. Der Gehäusemantel kann natürlich auch andere geometrische Formen aufweisen, wie zum Beispiel Oval und kann auch Kanten und/oder Ausformungen aufweisen.

Der Gehäusemantel könnte auch mehrere seitliche Öffnungen aufweisen, als nur die eine Anschluss-Öffnung.

Der Gehäuseboden ist bevorzugt ein einfaches, im Wesentlichen flaches, bevorzugt scheibenförmiges Bauteil, in welchem die Einfüllrohr-Öffnung ausgebildet ist.

Erfindungsgemäß sind der Gehäuseboden und der Gehäusemantel zwei verschiedene Bauteile, sind also nicht einteilig ausgeführt. Hierdurch kann der Gehäusemantel mitsamt der darin ausgebildeten AnschlussÖffnung gegenüber dem Gehäuseboden, zumindest vor der Verbindung von Gehäuseboden und Gehäusemantel, verdreht werden und somit die Position der Anschluss-Öffnung bei der Herstellung des Einfüllkopfes geändert werden, ohne dabei den Bereich des Gehäusebodens zu verändern.

Der Gehäuseboden und der Gehäusemantel können trennbar oder untrennbar miteinander verbunden sein, beispielsweise durch eine Schweißverbindung.

Der Gehäusemantel und der Gehäuseboden, insbesondere der ganze Einfüllkopf, bestehen bevorzugt aus Kunststoff oder aus Metall. Es könnte auch der Gehäusemantel aus Kunststoff und der Gehäuseboden aus Metall bestehen, oder umgekehrt.

Bevorzugt ist die Einfüllrohr-Öffnung exzentrisch im Gehäuseboden ausgebildet. In diesem Fall ist keine Rotationssymmetrie im Bereich des Gehäusebodens gegeben und somit die erfindungsgemäße Trennung zwischen Gehäuseboden und Gehäusemantel besonders vorteilhaft.

Vorzugsweise umfasst der Einfüllkopf einen Verschluss-Sockel, der mit dem Gehäusemantel verbunden ist. Der Verschluss-Sockel ist dann ebenfalls ein eigenes, zunächst getrenntes Bauteil. Der Verschluss-Sockel hat bevorzugt ebenfalls die Form eines Zylinder- oder Kegelstumpfmantels, insbesondere mit etwa dem selben Radius wie der Gehäusemantel. Bevorzugt hat der Verschluss-Sockel im Fügebereich mit dem Gehäusemantel die selbe Geometrie wie dieser. Der Verschluss-Sockel kann einen Bajonettverschluss zur Aufnahme eines Deckels aufweisen.

Die Anschluss-Öffnung im Gehäusemantel ist bevorzugt zur Aufnahme eines Anschlussstückes ausgebildet, insbesondere zur Aufnahme eines Entlüftungsnippels.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht eines erfindungsgemäßen Einfüllkopfes, in Fig. 1 unten, sowie der Einzelteile des Einfüllkopfes, in Fig. 1 oben.
- Fig. 2: ist eine Draufsicht auf einen erfindungsgemäßen Einfüllkopf.
- Fig. 3: ist eine Schnittansicht entsprechend Schnitt A-A der Fig. 2.
- Fig. 4: ist eine Ansicht auf einen erfindungsgemäßen Einfüllkopf von der dem Einfüllrohr abgewandten Seite.

### Detaillierte Beschreibung der Erfindung

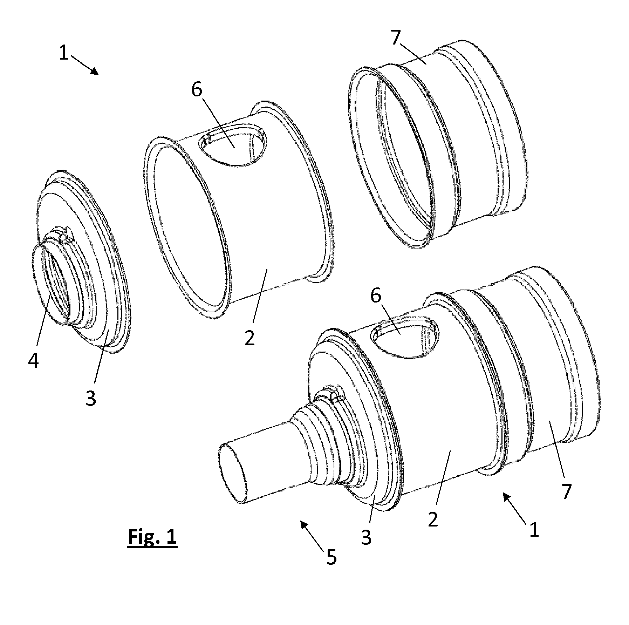

In den Fig. 1-4 ist ein erfindungsgemäßer Einfüllkopf 1 dargestellt, der, außer in der Fig. 1 obere Darstellung, jeweils bereits mit einem Ende eines Einfüllrohres 5 verbunden ist.

Der Einfüllkopf 1 weist einen Gehäusemantel 2 auf und einen Gehäuseboden 3. Im Gehäuseboden 3 ist eine Einfüllrohr-Öffnung 4 ausgebildet, zur Verbindung des Einfüllkopfes 1 mit einem Einfüllrohr 5. Im Gehäusemantel 2 ist eine Anschluss-Öffnung 6 ausgebildet, zur Aufnahme eines nicht dargestellten Entlüftungsnippels. Die Anschluss-Öffnung 6 bildet im Wesentlichen ein Loch an einer Seite des Gehäusemantels 2 und wird daher bei Verdrehung des Gehäusemantels 2 mit diesem verdreht.

Der Gehäuseboden 3 und der Gehäusemantel 2 sind verschiedene Bauteile und somit vor dem Zusammenbau getrennt, wie in Fig. 1 oben dargestellt.

Der Einfüllkopf 1 weist zudem einen ebenfalls als getrenntes Bauteil hergestellten Verschluss-Sockel 7 auf, der mit dem Gehäusemantel 2 verbunden ist. Der Verschluss-Sockel 7 hat im Wesentlichen die selbe Zylindermantel-Geometrie wie der Gehäusemantel 2. Verschluss-Sockel 7 und Gehäusemantel 2 weisen zumindest an deren Fügestelle die selbe Geometrie auf. Gehäusemantel 2 und Verschluss-Sockel 7 können auch einteilig ausgebildet sein. In den Verschluss-Sockel 7 ist ein Verschlusselement für den Einfüllkopf 1 aufgenommen oder daran befestigbar.

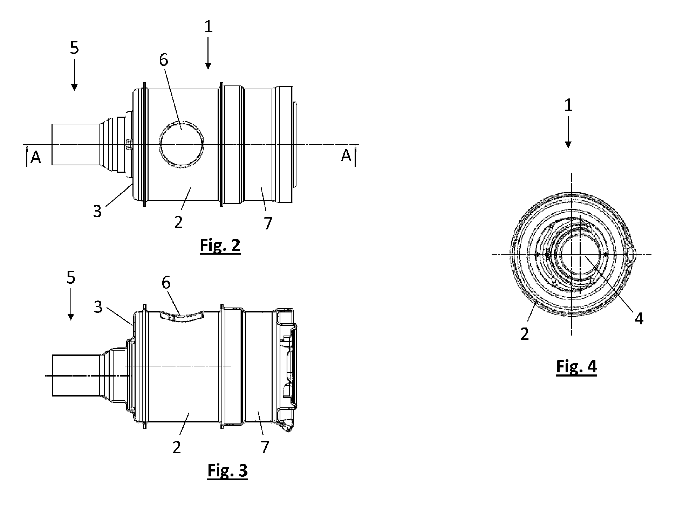

Die Einfüllrohr-Öffnung 4 ist exzentrisch im Gehäuseboden 3 ausgebildet, wie vor allem in Fig. 3 und Fig. 4 gut ersichtlich. Wie vor allem in Fig. 1 erkennbar, kann der Gehäusemantel 2 zumindest im Herstellungsprozess, vor der Verbindung mit dem Gehäuseboden 3, relativ zum Gehäuseboden 3 verdreht werden, so dass die Position der Anschluss-Öffnung 6 bzw. eines damit verbundenen Entlüftungsnippels geändert werden kann, ohne die Lage des Einfüllkopfes 1 im Raum zu ändern.

### Bezugszeichenliste

- 1: Einfüllkopf
- 2: Gehäusemantel
- 3: Gehäuseboden
- 4: Einfüllrohr-Öffnung
- 5: Einfüllrohr
- 6: Anschluss-Öffnung
- 7: Verschluss-Sockel

## Patentansprüche

1. Einfüllkopf für einen Kraftstofftank, wobei der Einfüllkopf (1) einen Gehäusemantel (2) umfasst und einen Gehäuseboden (3), wobei im Gehäuseboden (3) eine Einfüllrohr-Öffnung (4) zur Verbindung mit einem Einfüllrohr (5) ausgebildet ist, wobei im Gehäusemantel (2) eine Anschluss-Öffnung (6) ausgebildet ist,
**dadurch gekennzeichnet, dass** der Gehäuseboden (3) ein vom Gehäusemantel (2) verschiedenes Bauteil ist.

2. Einfüllkopf nach Anspruch 1,
**dadurch gekennzeichnet, dass** der Gehäuseboden (3) und der Gehäusemantel (2) trennbar oder untrennbar miteinander verbunden sind.

3. Einfüllkopf nach zumindest einem der vorhergehenden Ansprüche,
**dadurch gekennzeichnet, dass** die Einfüllrohr-Öffnung (4) exzentrisch im Gehäuseboden (3) ausgebildet ist.

4. Einfüllkopf nach zumindest einem der vorhergehenden Ansprüche,
**dadurch gekennzeichnet, dass** der Einfüllkopf (1) einen Verschluss-Sockel (7) umfasst, der mit dem Gehäusemantel (2) verbunden ist.

5. Einfüllkopf nach zumindest einem der vorhergehenden Ansprüche,
**dadurch gekennzeichnet, dass** die Anschluss-Öffnung (6) zur Aufnahme eines Anschlussstückes ausgebildet ist, insbesondere zur Aufnahme eines Entlüftungsnippels.
